# EUROPÄISCHE PATENTANMELDUNG

(11) **EP 3 796 067 A1**
(43) Veröffentlichungstag der Anmeldung: **24.03.2021**
(21) Anmeldenummer: 19198106.7
(22) Anmeldetag: 18.09.2019
(51) Int. Cl.: G02B 21/06, G02B 21/36

(54) **AUFNAHMEEINRICHTUNG ZUM ERZEUGEN EINES HOCHAUFGELÖSTEN BILDES EINES SICH DURCH EINEN AUFNAHMEBEREICH BEWEGENDEN OBJEKTS SOWIE VERFAHREN**

(71) Anmelder: Siemens Aktiengesellschaft, 80333 München (DE)
(72) Erfinder: Engel, Thomas, 73432 Aalen (DE)

(57) **Zusammenfassung**

Es wird eine Aufnahmeeinrichtung (100) zum Erzeugen eines hochaufgelösten Bildes eines sich durch einen Aufnahmebereich (A) bewegenden Objekts (10) aus einer Mehrzahl von N Bildern (B_1 - B_N) vorgeschlagen. Jedes der N Bilder (B_1 - B_N) wird mit einer jeweiligen optischen Konfiguration (OC_1 - OC_N) aus einer Mehrzahl von N optischen Konfigurationen (OC_1 - OC_N) der Aufnahmeeinrichtung (100) erfasst. Eine Erkennungseinheit (102) ist zum Erkennen des Objekts (10) und zum Ermitteln einer Position und/oder einer Ausrichtung des erkannten Objekts (10) in jedem der N Bilder (B_1 - B_N) eingerichtet. Es werden N synthetische Bilder (SB_1 - SB_N) erzeugt, in denen das Objekt (10) jeweils an der gleichen Position und mit der gleichen Ausrichtung angeordnet ist. Aus den N synthetischen Bilder (SB_1 - SB_N) wird mittels Fourier-ptychografischen Verfahren ein hochaufgelöstes Bild (B_HQ) des Objekts (10) erzeugt.

Die Aufnahmeeinrichtung ermöglicht es, Fourier-ptychografische Verfahren auch bei bewegten Objekten anzuwenden, wodurch hochaufgelöste Bilder von bewegten Objekten mit großem Gesichtsfeld und hoher Tiefenschärfe möglich sind.

## Beschreibung

Die vorliegende Erfindung betrifft eine Aufnahmeeinrichtung zum Erzeugen eines hochaufgelösten Bildes eines sich durch einen Aufnahmebereich bewegenden Objekts sowie ein entsprechendes Verfahren.

Bekannte Mikroskope weisen eine begrenzte Auflösung auf, welche insbesondere durch die verwendete Wellenlänge und die numerische Apertur des verwendeten Objektivs bestimmt wird. Je größer die numerische Apertur, umso besser ist die Auflösung. Allerdings geht eine große Apertur mit einem geringen Tiefenschärfebereich und einem sehr kleinen Gesichtsfeld einher. Um größere dreidimensionale Objekte, deren Ausdehnung in Strahlrichtung größer als der Tiefenschärfebereich ist, scharf abzubilden, kann eine kleine Apertur mit entsprechend hoher Tiefenschärfe verwendet werden, wobei dann die laterale Auflösung zurückgeht.

Es ist bekannt, ein sogenanntes "Fokus-Stacking" durchzuführen, wobei mehrere Bilder mit unterschiedlichen Fokusebenen zu einem Gesamtbild kombiniert werden, welches dann einen entsprechend erhöhten Tiefenschärfebereich aufweist. Während einer solchen Aufnahmeserie darf sich das beobachtete Objekt jedoch nicht bewegen.

Die Fourier-Ptychografie ist eine Möglichkeit, ein hochaufgelöstes Bild einer Probe mit einem großen Gesichtsfeld und hoher Tiefenschärfe zu erzeugen. Dabei wird eine Mehrzahl von Bildern der Probe mit unterschiedlichen optischen Konfigurationen aufgenommen, wobei bei den unterschiedlichen optischen Konfigurationen jeweils ein anderer Teil des Fourier-Spektrums der Probe aufgenommen wird. Die unterschiedlichen Bilder haben dabei einen - zumindest teilweise - unterschiedlichen Informationsgehalt, insbesondere enthalten sie unterschiedliche Raumfrequenzen der Probe. Die unterschiedlichen Bilder lassen sich im Fourier-Raum zu einem großen Bild mit einem sehr großen Fourier-Spektrum der Probe zusammenfügen. Durch Rücktransformation in den Ortsraum kann so ein hochaufgelöstes Bild der Probe mit einem großen Gesichtsfeld und hoher Tiefenschärfe erzeugt werden.

Beispielsweise beschreiben US 10,176,567 B2, US 94,26455 B2, EP 2 915 180 B1 sowie US 10,228,550 B2 unterschiedliche Vorrichtungen und Verfahren der Fourier-Ptychografie. Auch US 2017/0371141 A1, US 2017/0146788 A1, US 2016/0088205 A1 beschreiben entsprechende bekannte Vorrichtungen und Verfahren.

Da bei der Fourier-Ptychografie eine Bilderserie aufgenommen werden muss, was eine bestimmte Zeitspanne in Anspruch nimmt, ist diese Methode bislang auf die Abbildung statischer oder quasi-statischer Proben beschränkt. Dynamische Systeme, die sich innerhalb dieser Zeitspanne verändern, lassen sich mit der Fourier-Ptychografie daher bisher nicht abbilden.

Vor diesem Hintergrund besteht eine Aufgabe der vorliegenden Erfindung darin, das Erzeugen eines hochaufgelösten Bildes eines bewegten Objekts zu verbessern.

Gemäß einem ersten Aspekt wird eine Aufnahmeeinrichtung zum Erzeugen eines hochaufgelösten Bildes eines sich durch einen Aufnahmebereich bewegenden Objekts aus einer Mehrzahl von N Bildern vorgeschlagen. Die Aufnahmeeinrichtung umfasst eine Beleuchtungsvorrichtung zum Beleuchten des Aufnahmebereichs und eine Erfassungsvorrichtung zum Erfassen eines mittels eines Objektivs erzeugten Abbilds des beleuchteten Aufnahmebereichs als eines der N Bilder, wobei die Aufnahmeeinrichtung zum Aufnehmen einer Bilderserie umfassend die N Bilder derart eingerichtet ist, dass jedes der N Bilder mit einer jeweiligen optischen Konfiguration aus einer Mehrzahl von N optischen Konfigurationen der Aufnahmeeinrichtung erfasst wird. Weiterhin ist eine Erkennungseinheit zum Erkennen des Objekts und zum Ermitteln einer Position und/oder einer Ausrichtung des erkannten Objekts in jedem der N Bilder vorgesehen. Eine Erzeugungseinheit ist zum Erzeugen von N synthetischen Bildern auf Basis der erfassten N Bilder eingerichtet, wobei die Position des Objekts in jedem der erzeugten N synthetischen Bilder gleich einer vorbestimmten Referenzposition und/oder die Ausrichtung des Objekts in jedem der erzeugten N synthetischen Bilder gleich einer vorbestimmten Referenzausrichtung ist. Eine Auswerteeinheit ist zum Erzeugen des hochaufgelösten Bildes des Objekts auf Basis der N synthetischen Bilder eingerichtet.

Diese Aufnahmeeinrichtung weist mehrere Vorteile auf. Insbesondere ermöglicht es diese Aufnahmeeinrichtung, unter Verwendung von Fourier-ptychografischen Verfahren ein bewegtes Objekt mit einer hohen Auflösung und mit einer hohen Tiefenschärfe sowie mit einem großen Gesichtsfeld zu erfassen. Das erzeugte hochaufgelöste Bild des Objekts kann auch als 3D-Bild des Objekts bezeichnet werden, da die hohe Auflösung sowohl in einer Ebene senkrecht zu einer optischen Achse der erfassenden Optik, als auch parallel dazu, also in der Tiefe, vorhanden ist. Es lassen sich daher Bilder von dynamischen Systemen, insbesondere von Suspensionen fester Objekte in Fluiden, mit den genannten Eigenschaften erzeugen. Ein jeweiliges Objekt weist dabei vorzugsweise eine sich über die Dauer einer Aufnahmeserie umfassend die N Bilder feste geometrische Form auf.

Ein Anwendungsbeispiel für die Aufnahmeeinrichtung ist das Aufnehmen von Blut oder Blutbestandteilen, welche durch eine Flusszelle gepumpt werden. Die Aufnahmeeinrichtung ermöglicht es, mittels kontinuierlicher Bildaufnahme und kontinuierlicher Auswertung der Bilderserien, hochaufgelöste Bilder von einer Vielzahl von Blutzellen oder anderen Blutbestandteilen zu erzeugen, was eine medizinische Behandlung deutlich beschleunigen kann und wodurch sich Kosten einsparen lassen. Weitere Anwendungsgebiete liegen beispielsweise in der Abgasuntersuchung und in der Qualitätskontrolle von kontinuierlich hergestellten Waren, beispielsweise Meterware.

Die Aufnahmeeinrichtung ist insbesondere als ein Mikroskop ausgebildet, wobei durch unterschiedliche Beleuchtungseinstellungen die verschiedenen optischen Konfigurationen erzeugt werden. Eine Größe des Aufnahmebereichs der Aufnahmeeinrichtung wird insbesondere durch das verwendete Objektiv bestimmt. Eine hohe Maßstabszahl, auch als Vergrößerung bezeichnet, bedingt dabei einen relativ kleinen Aufnahmebereich, dies wird auch als Gesichtsfeld bezeichnet. Der Aufnahmebereich weist vorliegend vorzugsweise wenigstens einen Durchmesser von einem Millimeter, bevorzugt mehrere Millimeter, weiter bevorzugt ein- oder mehrere Zentimetern, auf.

Die Beleuchtungsvorrichtung umfasst eine oder mehrere Lichtquellen. Vorzugsweise ist die Beleuchtungsvorrichtung zum Beleuchten des Aufnahmebereichs mit räumlich kohärentem Licht eingerichtet. Beispielsweise erzeugt die Beleuchtungsvorrichtung monochromatische Strahlung aus einem Wellenlängenbereich von dem nahen Infrarot bis hin zu UV, entsprechend einer Wellenlänge von 10 µm - 10 nm. Die Strahlung wird vorzugsweise kollimiert, also mit einer ebenen Wellenfront auf den Aufnahmebereich abgestrahlt.

Die Erfassungsvorrichtung umfasst das Objektiv zum Abbilden des Aufnahmebereichs auf eine Detektionsfläche, und einen Bilddetektor, der zum Erfassen einer Intensitätsverteilung auf der Detektionsfläche eingerichtet ist. Ein jeweiliges erfasstes Bild entspricht damit einer zweidimensionalen Intensitätsverteilung, die beispielsweise in einer Matrixdarstellung darstellbar ist. Das Objektiv weist beispielsweise eine Maßstabszahl von 10x auf, das heißt, dass das Objektiv einen Bereich des Aufnahmebereichs von 1 mm mit einer Größe von 10 mm auf der Detektionsfläche abbildet. Das Objektiv weist beispielsweise eine numerische Apertur von 0,2 auf, was in Luft einem Akzeptanzwinkel von etwa 23° entspricht. Die numerische Apertur ist definiert als NA = n × sin(α), wobei n der Brechungsindex des das Objektiv umgebenden Mediums ist (für Luft ist n ungefähr gleich eins) und α der halbe Akzeptanzwinkel des Objektivs. Je nach eingesetzter Optik, insbesondere in Abhängigkeit des verwendeten Objektivs, kann ein Tiefenschärfebereich im Bereich von mehreren 10 µm bis hin zu 1 mm realisiert werden.

Der Bilddetektor ist beispielsweise in CCD- oder in CMOS-Technik ausgebildet. Der Bilddetektor ist damit zum Erfassen eines digitalen Bildes eingerichtet, welches eine durch die Anzahl an Pixeln bestimmte Auflösung aufweist. Je höher die Pixeldichte, umso höher ist die Auflösung des Bilddetektors. Andererseits sinkt mit zunehmender Pixeldichte zwangsläufig die Größe eines einzelnen Pixels, weshalb eine Lichtempfindlichkeit einzelner Pixel zurückgeht. Der Bilddetektor ist daher vorzugsweise an das Objektiv angepasst, so dass eine Auflösung des Bildes im Bereich der Auflösung des von dem Objektiv erzeugten Abbild des Aufnahmebereichs liegt. Die Auflösung des Objektivs kann beispielsweise gemäß dem Abbe-Kriterium als d ∼ A/NA ermittelt werden. Dabei ist d der minimale Abstand zweier Strukturen, die in dem erzeugten Bild voneinander getrennt erkennbar sind, λ ist die verwendete Beleuchtungswellenlänge. In Abhängigkeit eines Empfindlichkeitsverlaufs des Bilddetektors kann die Auflösung mittels d = k1 * λ/NA berechnet werden, wobei k1 = 0,61 unter Anwendung des Rayleigh-Kriteriums (logarithmischer Empfindlichkeitsverlauf) oder k1 = 0,5 unter Anwendung des Sparrow-Kriteriums (linearer Empfindlichkeitsverlauf) ist.

Die Aufnahmeeinrichtung umfasst weiterhin die für die digitale Bilderfassung benötigten Elemente, also beispielsweise eine Recheneinheit sowie ein Speichermedium. Beispielsweise umfasst die Aufnahmeeinrichtung eine Steuerungsvorrichtung, die als ein Computer oder eine CPU ausgebildet ist. Die Steuerungsvorrichtung ist dazu eingerichtet, die Beleuchtungsvorrichtung und die Erfassungsvorrichtung anzusteuern, so dass die N Bilder einer Bilderserie aufgenommen werden. Dazu gibt die Steuerungsvorrichtung beispielsweise eine der N optischen Konfigurationen vor und nimmt dann ein Bild auf. Das Bild liegt insbesondere als ein digitaler Datensatz vor, wobei die zur Aufnahme verwendete optische Konfiguration als Metadaten zu dem jedem Bild mit abgespeichert werden. Weiterhin werden für jedes der N Bilder vorzugsweise die Belichtungsparameter, wie beispielsweise ein Aufnahmezeitpunkt und eine Belichtungsdauer, mit abgespeichert.

Zwei optische Konfigurationen der N optischen Konfigurationen der Aufnahmeeinrichtung weisen insbesondere einen unterschiedlichen Strahlengang auf. Vorzugsweise werden mit den unterschiedlichen optischen Konfigurationen unterschiedliche Informationsgehalte des Aufnahmebereichs, und damit auch des sich durch diesen bewegenden Objekts, erfasst. Durch ptychografisches Auswerten einer Bilderserie lassen sich die unterschiedlichen Informationsgehalte kombinieren und so das hochaufgelöste Bild erzeugen.

Die Erkennungseinheit ist vorzugsweise zum Durchführen einer Mustererkennung an jedem der N Bilder ausgebildet, um das Objekt in einem jedem der N Bilder zu erkennen. Wenn nachfolgend die Rede davon ist, dass das Objekt in einem Bild enthalten ist, so ist damit insbesondere die Abbildung des Objekts in dem Bild gemeint. Hierunter wird vorzugsweise verstanden, dass die Erkennungseinheit das Objekt in einem jeweiligen Bild lokalisiert. Beispielsweise gibt die Erkennungseinheit einen Bildbereich des Bildes an, in welchem sich das Objekt befindet.

Vorzugsweise umfasst die Erkennungseinheit ein neuronales Netzwerk, welches anhand von Beispielbildern für eine bestimmte Objektklasse, beispielsweise Blutzellen, trainiert wurde. Die Erkennungseinheit kann aber auch zum Durchführen einer Mustererkennung mittels fest vorgegebener Algorithmen eingerichtet sein. Weiterhin kann die Erkennungseinheit Manipulationen und/oder Transformationen an einem jeweiligen Bild durchführen.

Die Erkennungseinheit ist zudem dazu eingerichtet, eine Position des Objekts und/oder eine Ausrichtung des Objekts in dem Bild zu ermitteln. Die Position bezieht sich dabei beispielsweise auf ein gedachtes, an einer vorbestimmten Position des Bildes, beispielsweise in der Mitte oder in einer Ecke des Bildes, angeordnetes Koordinatensystem. Das Koordinatensystem ist für jedes der N Bilder identisch, so dass beispielsweise ein Mittelpunkt des Bildes in jedem der N Bilder die gleichen Koordinaten, beispielsweise ein Paar aus Ordinate und Abszisse, aufweist. Damit hat jeder Bildpunkt eindeutige Koordinaten. Die Position kann beispielsweise bezogen auf genau einen Punkt des Objekts, beispielsweise einen Mittelpunkt des Objekts, angegeben sein, oder den Bereich angeben, in welchem das Objekt erkannt wurde. Es kann auch eine Aufzählung aller Koordinatenpaare, deren Bildpunkte zu dem Objekt gehören, angegeben sein. Die Ausrichtung bezieht sich beispielsweise auf eine Drehung des Objekts. Eine Drehachse kann dabei beliebig durch das Objekt liegen. Eine Drehung lässt sich beispielsweise daran erkennen, dass sich charakteristische Merkmale des Objekts senkrecht zu einer Bewegungsrichtung des Objekts und/oder relativ zueinander bewegt oder verschoben haben.

Die Erzeugungseinheit erzeugt die N synthetischen Bilder auf Basis der N erfassten Bilder. Insbesondere erzeugt die Erzeugungseinheit für jedes der N erfassten Bilder genau ein synthetisches Bild. Die Erzeugungseinheit verwendet die von der Erkennungseinheit ermittelten Informationen bezüglich des erkannten Objekts, insbesondere der Position des Objekts und der Ausrichtung des Objekts in dem jeweiligen Bild. Die Erzeugungseinheit erzeugt die synthetischen Bilder insbesondere derart, dass das Objekt in jedem der synthetischen Bilder an der gleichen Position und/oder mit der gleichen Ausrichtung wie in einer vorbestimmten Referenzposition oder Referenzausrichtung angeordnet ist. Die vorbestimmte Referenzposition oder Referenzausrichtung kann beliebig gewählt werden, es kann aber auch ein Referenzbild aus den N erfassten Bildern festgelegt werden, wobei die Position und die Ausrichtung des Objekts in dem Referenzbild die Referenzposition bestimmen. Das heißt, dass die Koordinaten des Objekts in jedem der synthetischen Bilder die gleichen sind. Das Referenzbild kann dabei ein vorbestimmtes Bild aus den N erfassten Bildern sein. Als Referenzbild kann beispielsweise das mit einer vorbestimmten optischen Konfiguration der Aufnahmeeinrichtung erfasste Bild bestimmt sein. Die Referenzposition und Referenzausrichtung können für unterschiedliche Bilderserien unterschiedlich vorbestimmt sein.

Die synthetischen Bilder weisen vorzugsweise mindestens die gleiche Größe und Auflösung auf, wie die erfassten Bilder.

Die N synthetischen Bilder bilden somit eine synthetische Bilderserie, die einer Bilderserie entspricht, die mit den N unterschiedlichen optischen Konfigurationen aufgenommen wurde, wobei sich das Objekt innerhalb der synthetischen Bilderserie scheinbar nicht bewegt, also immer an der gleichen Position und mit der gleichen Ausrichtung erscheint. Man kann auch sagen, dass das Objekt in der synthetischen Bilderserie als quasi-statisch erscheint. Die synthetische Bilderserie kann daher insbesondere durch Fourier-ptychografische Methoden und Verfahren ausgewertet werden, um ein hochaufgelöstes Bild des Objekts zu erhalten. Nachfolgend kann daher auch von einer ptychografischen Bilderserie gesprochen werden.

Die Auswerteeinheit ist zum Erzeugen des hochaufgelösten Bildes des Objekts auf Basis der N synthetischen Bilder mittels Fourier-ptychografischen Methoden eingerichtet. Das heißt, dass die Auswerteeinheit beispielsweise jedes der N synthetischen Bilder, die im Ortsraum vorliegen, mittels einer zweidimensionalen Fourier-Transformation in den Frequenzraum überführt. Jedes der N synthetischen Bilder umfasst dabei einen etwas unterschiedlichen Frequenzbereich des Aufnahmebereichs oder des Objekts, wobei Überschneidungen zwischen verschiedenen Bildern vorhanden sein können. Die N transformierten synthetischen Bilder lassen sich im Frequenzraum zu einem großen Bild zusammenfügen, das insbesondere einen viel größeren Frequenzbereich des Aufnahmebereichs oder des Objekts aufweist. Ein größerer Frequenzbereich im Frequenzraum ist dabei gleichbedeutend zu einer höheren Auflösung im Ortsraum. Durch eine entsprechende Rücktransformation des großen Bilds aus dem Frequenzraum in den Ortsraum wird daher ein hochaufgelöstes Bild des Objekts erzeugt.

Die jeweilige Einheit, also die Erkennungseinheit, Erzeugungseinheit und/oder die Auswerteeinheit kann als ein separates Bauteil oder als teilweise oder vollständig integriertes Bauteil, beispielsweise als Teil der Steuerungsvorrichtung, implementiert sein. Weiterhin ist es möglich, die jeweilige Einheit und/oder die Steuerungsvorrichtung hardwaretechnisch und/oder softwaretechnisch zu implementieren. Bei einer hardwaretechnischen Implementierung kann die jeweilige Einheit und/oder die Steuerungsvorrichtung zum Beispiel als Computer oder als Mikroprozessor ausgebildet sein. Bei einer softwaretechnischen Implementierung kann die jeweilige Einheit und/oder die Steuerungsvorrichtung als Computerprogrammprodukt, als eine Funktion, als eine Routine, als Teil eines Programmcodes oder als ausführbares Objekt ausgebildet sein.

Die Aufnahmeeinrichtung ist nicht darauf beschränkt, ein hochaufgelöstes Bild eines einzelnen sich durch den Aufnahmebereich bewegenden Objekts zu erzeugen. Vielmehr lassen sich mit der Aufnahmeeinrichtung eine Vielzahl von sich durch den Aufnahmebereich bewegenden Objekten erfassen und entsprechende hochaufgelöste Bilder erzeugen. Dabei kann für ein jedes Objekt, von dem ein hochaufgelöstes Bild erzeugt werden soll, eine eigene Bilderserie umfassend N Bilder vorliegen. Es ist aber auch möglich, anhand einer Bilderserie mit N Bildern hochauflösende Bilder von zwei oder auch mehr als zwei Objekten zu erzeugen. Vorzugsweise werden mit der Aufnahmeeinrichtung kontinuierlich Bilder mit verschiedenen optischen Konfigurationen erfasst. Dabei werden die N unterschiedlichen optischen Konfigurationen beispielsweise zyklisch durchlaufen und jeweils ein Bild aufgenommen. Aus dem so entstehenden Bilderstrom lässt sich für ein jeweiliges Objekt beispielsweise jeweils eine Bilderserie umfassend N erfasste Bilder entnehmen, anhand welcher dann wie beschrieben das hochauflösende Bild des Objekts erzeugt wird. Für zwei unterschiedliche Objekte können die Bilderserien dabei ganz oder teilweise identische Bilder aufweisen.

Insbesondere bei mehreren Objekten im Aufnahmebereich kann es vorteilhaft sein, einem jeweiligen Objekt einen Marker oder eine Nummer zuzuordnen, die diesem Objekt in jedem der N Bilder zugeordnet wird. Damit lässt sich eine fehlerhafte Zuordnung eines Bildes eines Objekts zu einem erkannten Objekt vermeiden. Man kann auch sagen, dass die Erkennungseinheit ein Objekttracking über die N Bilder hinweg durchführt.

In Abhängigkeit einer Bewegungsgeschwindigkeit des Objekts oder der Objekte sowie einer gewünschten Auflösung des hochaufgelösten Bildes lassen sich Parameter der Aufnahmeeinrichtung festlegen und diese entsprechend konfigurieren. Für eine hohe Auflösung und bei relativ kleiner numerischer Apertur des Objektivs ist eine größere Anzahl an unterschiedlichen optischen Konfigurationen vorteilhaft. Je größer die Anzahl an optischen Konfigurationen, umso länger dauert es jedoch, bis eine Bilderserie mit allen unterschiedlichen optischen Konfigurationen aufgenommen ist. Vorzugsweise dauert die Aufnahme einer Bilderserie umfassend die N Bilder nicht länger, als das Objekt benötigt, um sich komplett durch den Aufnahmebereich zu bewegen.

In Ausführungsformen der Aufnahmeeinrichtung können verschiedene Betriebsmodi vorgesehen sein, die beispielsweise ein schnelleres Erfassen von hochaufgelösten Bildern mit einer reduzierten Anzahl an optischen Konfigurationen der Aufnahmeeinrichtung erlauben. Es kann hierzu beispielsweise eine Anzahl von M unterschiedlichen Konfigurationen, mit M < N, ausgewählt werden. Die so erzeugten hochaufgelösten Bilder weisen eine geringere Auflösung auf, als wenn alle N optischen Konfigurationen verwendet werden, dafür kann eine Bilderserie mit den M Bildern in einer kürzeren Zeit erfasst werden. Es lassen sich daher auch schneller bewegte Objekte erfassen.

Gemäß einer Ausführungsform der Aufnahmeeinrichtung umfasst diese ferner eine Segmentierungseinheit zum Segmentieren des erkannten Objekts in jedem der N Bilder zum Bereitstellen von N Objektsegmenten, wobei ein jeweiliges der N Objektsegmente das Objekt umfasst. Weiterhin ist eine Ermittlungseinheit zum Ermitteln von N Transformationsvorschriften vorgesehen. Jede der N Transformationsvorschriften ist einem der N Objektsegmente zugeordnet. Die jeweilige Transformationsvorschrift wird derart ermittelt, dass durch Anwenden der zugeordneten Transformationsvorschrift auf das Objektsegment ein transformiertes Objektsegment erzeugt wird, wobei die Position des Objekts in dem transformierten Objektsegment der vorbestimmten Referenzposition und/oder die Ausrichtung des Objekts in dem transformierten Objektsegment der vorbestimmten Referenzausrichtung entspricht. Hierbei ist die Erzeugungseinheit dazu eingerichtet, durch Anwenden der entsprechenden zugeordneten Transformationsvorschrift auf jedes der N Objektsegmente N transformierte Objektsegmente zu erzeugen und die N synthetischen Bilder mittels der N transformierten Objektsegmente zu erzeugen.

Die Segmentierungseinheit und/oder die Ermittlungseinheit sind vorzugsweise Bestandteile der Erzeugungseinheit.

Unter einem Objektsegment, das von der Segmentierungseinheit bereitgestellt wird, wird vorliegend insbesondere ein Ausschnitt aus dem jeweiligen der N Bilder verstanden, wobei das Objekt in dem Ausschnitt vorzugsweise vollständig enthalten ist. Man kann daher auch von einem Freistellen des Objekts sprechen. Das Objektsegment selbst ist daher ebenfalls ein Bild, wobei diejenigen Bildbereiche, die das Objekt nicht enthalten, abgeschnitten sind. Ein Objektsegment kann beispielsweise eine quadratische, eine rechteckige, eine runde, eine elliptische und/oder eine Freiform-Begrenzung aufweisen. Das Objektsegment weist insbesondere als ein Attribut die Koordinaten des Objektsegments in dem Koordinatensystem des jeweiligen Bildes auf. Vorzugsweise enthält jeder Bildpunkt des Objektsegments die zu dem Bildpunkt gehörenden Koordinaten.

Die Ermittlungseinheit ermittelt die N Transformationsvorschriften insbesondere in Abhängigkeit der ermittelten Position des Objekts in dem jeweiligen der N Bilder und der vorbestimmten Referenzposition und/oder in Abhängigkeit der ermittelten Ausrichtung des Objekts in dem jeweiligen der N Bilder und der vorbestimmten Referenzausrichtung des Objekts. Die Transformationsvorschrift kann im mathematischen Sinne auch als eine Abbildung bezeichnet werden.

Durch Anwenden der einem Objektsegment zugeordneten Transformationsvorschrift auf das Objektsegment wird ein transformiertes Objektsegment erzeugt. Das transformierte Objektsegment ist insbesondere dadurch gekennzeichnet, dass eine Position und/oder eine Ausrichtung des Objekts in dem transformierten Objektsegment der Referenzposition und/oder Referenzausrichtung ist. Das heißt, dass die Transformationsvorschrift insbesondere auf die Koordinaten der Bildpunkte wirkt.

Wenn sich das Objekt zwischen zwei Aufnahmen mit unterschiedlichen optischen Konfigurationen linear und gleichförmig durch den Aufnahmebereich bewegt, dann liegt beispielsweise eine Verschiebung des Objekts vor, wobei die entsprechende Transformationsvorschrift einer linearen Verschiebung entspricht. Bei einer Bewegung in x-Richtung kann diese als x' = x + dx angegeben werden. Bei konstanter Geschwindigkeit v kann dies als x' = x + v × dt, wobei dt der zeitliche Abstand zwischen den beiden Bildern ist, geschrieben werden.

Bei komplizierteren als linearen gleichförmigen Bewegungen kann die Transformationsvorschrift insbesondere als eine Transformationsmatrix angegeben werden.

Vorzugsweise ist die Ermittlungseinheit ferner dazu eingerichtet, die Transformationsvorschrift in Abhängigkeit einer Verzerrung und/oder einer Aberration des Bildes zu ermitteln. Die Verzerrung und/oder Aberration kann für eine jeweilige der N optischen Konfigurationen individuell unterschiedlich sein. Vorzugsweise ist die Verzerrung und/oder Aberration vorbestimmt, beispielsweise durch entsprechende Kalibration.

In dieser Ausführungsform erzeugt die Erzeugungseinheit die N synthetischen Bilder beispielsweise indem sie die N transformierten Objektsegmente erzeugt und diese anschließend in jeweils einen synthetischen Bilderrahmen einsetzt. Die Objektsegmente werden dabei gemäß den ihren Bildpunkten zugeordneten Koordinaten in dem Bilderrahmen platziert.

Gemäß einer weiteren Ausführungsform der Aufnahmeeinrichtung ist die Erzeugungseinheit zum Erzeugen der N synthetischen Bilder in Abhängigkeit einer Korrekturinformation eingerichtet.

Die Korrekturinformation umfasst insbesondere einen Bildhintergrund für ein jeweiliges der N Bilder. Der Bildhintergrund ist beispielsweise gleichförmig hell oder dunkel. Der Bildhintergrund kann sich zwischen unterschiedlichen optischen Konfigurationen unterscheiden. Insbesondere kann für jede der N optischen Konfigurationen ein Bildhintergrund vorgegeben sein. Der jeweilige Bildhintergrund kann beim Erzeugen der N synthetischen Bilder beispielsweise von dem Bild "abgezogen" werden, so dass eventuell im Hintergrund vorhandenes Bildrauschen in dem entsprechenden synthetischen Bild entfernt ist.

Für eine jeweilige optische Konfiguration lässt sich der Bildhintergrund beispielsweise in separaten Kalbrationsmessungen ermitteln. Weiterhin kann vorgesehen sein, dass der Bildhintergrund aus einer Mehrzahl von mit der gleichen optischen Konfiguration erfassten Bildern ermittelt wird. Die sich durch den Aufnahmebereich bewegenden Objekte befinden sich dabei jeweils an unterschiedlichen Positionen, so dass es statistisch gesehen jeweils Bereiche mit freiem Hintergrund gibt, die sich zu einem Gesamthintergrund zusammensetzen lassen. Vorzugsweise kann der Hintergrund oder die Korrekturinformation daher fortlaufend und auch während laufender Messungen aktualisiert werden. Man kann auch von einer automatischen Kalibrationsfunktion sprechen.

In Ausführungsformen kann vorgesehen sein, dass ein jeweiliges transformiertes Objektsegment in ein synthetisches Bild mit einem künstlichen Bildhintergrund, beispielsweise einem vollständig rauschfreien Bildhintergrund, eingesetzt wird.

Gemäß einer weiteren Ausführungsform der Aufnahmeeinrichtung ist die Erzeugungseinheit dazu eingerichtet, die N synthetischen Bilder mittels Interpolation, insbesondere in Bezug auf die Position und/oder die Ausrichtung des Objekts in dem jeweiligen der N synthetischen Bilder, zu erzeugen.

Unter einer Interpolation wird vorliegend verstanden, dass zwischen diskreten Werten liegende Zwischenwerte berechnet oder erzeugt werden. Für bestimmte digitale Bildverarbeitungsschritte ist es hilfreich, eine höhere Auflösung, also eine größere Anzahl an Bildpunkten oder Pixeln, als beispielsweise der Bilddetektor aufweist, zu verwenden. Die zusätzlichen Bildpunkte lassen sich mittels Interpolation erzeugen. Dabei kann beispielsweise ein Mittelwert der benachbarten Bildpunkte bezüglich deren Helligkeitsinformation berechnet werden und das Ergebnis dem "neuen" Pixel als Helligkeitsinformation zugewiesen werden. Die Interpolation kann mittels verschiedener Funktionen und in Abhängigkeit von vielen oder auch allen Bildpunkten des ursprünglichen Bildes durchgeführt werden.

Durch eine solche Interpolation ist insbesondere eine Platzierung des Objekts auf der Referenzposition und mit der Referenzausrichtung mit deutlich erhöhter Genauigkeit möglich. Man kann auch sagen, das Objekt wird mit Subpixel-Genauigkeit platziert. Damit lassen sich störende Artefakte in dem erzeugten hochaufgelösten Bild vermeiden.

Gemäß einer weiteren Ausführungsform der Aufnahmeeinrichtung ist die Segmentierungseinheit zum Segmentieren des erkannten Objekts in Abhängigkeit eines vorgebbaren Schwellwerts für eine Intensitätsfunktion und/oder eine Kontrastfunktion eines Bildpunkts eingerichtet.

Hierbei ist die Segmentierungseinheit vorteilhaft nicht auf eine feste geometrische Begrenzung für die Objektsegmente festgelegt, sondern die Objektsegmente werden gemäß dem Schwellwert der Intensitätsfunktion oder der Kontrastfunktion jeweils individuell bereitgestellt. Die Intensitätsfunktion kann hierbei als ein Wert einer Intensität gegeben sein, vorzugsweise handelt sich bei der Intensitätsfunktion jedoch beispielsweise um einen Gradienten der Helligkeit über eine Anzahl von zu dem Bildpunkt benachbarten Bildpunkten hinweg. Die Kontrastfunktion kann sich beispielsweise auf einen Helligkeitskontrast, Phasenkontrast oder dergleichen beziehen.

Für unterschiedliche optische Konfigurationen kann dabei eine unterschiedliche Intensitätsfunktion und/oder Kontrastfunktion und/oder ein unterschiedlicher Schwellwert vorbestimmt sein.

Der Schwellwert kann vorzugsweise anhand eines entsprechenden Werts der Intensitätsfunktion für ein jeweiliges Hintergrundbild vorbestimmt sein.

Gemäß einer weiteren Ausführungsform der Aufnahmeeinrichtung ist die Erkennungseinheit zum Erkennen des Objekts in Abhängigkeit einer Bewegungsinformation für das Objekt und/oder eines Objekttyps eingerichtet.

Hiermit lässt sich ein rechentechnischer Aufwand zum Erkennen des Objekts reduzieren. Zum Beispiel ist bei Verwendung einer Flusszelle bekannt, dass sich Objekte entlang der vorgegebenen Strömungsrichtung und im Wesentlichen mit der Strömungsgeschwindigkeit bewegen. Diese Information kann zielführend genutzt werden, indem ausgehend von der Position des Objekts in dem vorhergehenden Bild in den nachfolgenden Bildern insbesondere derjenige Bereich auf das Objekt hin analysiert wird, in dem das Objekt unter der Annahme einer linearen gleichförmigen Bewegung erwartet wird. Je nach konkreter Anwendung kann die Bewegungsinformation auch komplexere Bewegungsmuster umfassen. Vorzugsweise ist die Bewegungsinformation mit der Bildaufnahme synchronisiert.

Weiterhin kann ein Suchen und Erkennen von neuen Objekten, die in den Aufnahmebereich eintreten, auf einen kleinen Bereich in den Bildern beschränkt werden, da bekannt ist, an welchem Bildrand neue Objekte in den Aufnahmebereich eintreten.

Bei bekannter Anwendung ist ein Objekttyp, der erfasst werden soll, bekannt. In Abhängigkeit des Objekttyps kann ein Erscheinungsbild des Objekts bei einer jeweiligen optischen Konfiguration unterschiedlich sein. Das Erscheinungsbild, nachfolgend auch Signatur genannt, lässt sich daher insbesondere vorab ermitteln und beispielsweise als Referenz beim Erkennen von Objekten heranziehen. Weiterhin ist dann beispielsweise auch eine erwartete geometrische Form des oder der Objekte, und damit deren Signatur, bekannt.

In Ausführungsformen der Aufnahmeeinrichtung kann eine Datenbank mit unterschiedlichen Objekttypen und deren Signaturen für die unterschiedlichen optischen Konfigurationen vorgesehen sein, auf welche die Erkennungseinheit zum Erkennen des Objekts in den Bildern zurückgreifen kann.

Gemäß einer weiteren Ausführungsform der Aufnahmeeinrichtung ist die Beleuchtungsvorrichtung zum Beleuchten des Aufnahmebereichs aus unterschiedlichen Winkelpositionen eingerichtet, wobei eine jeweilige Winkelposition einer der N optischen Konfigurationen der Aufnahmeeinrichtung entspricht.

Eine Beleuchtung aus unterschiedlichen Winkeln bedeutet, dass andere optische Winkelbereiche des vorgegebenen Aufnahmebereichs, und damit auch der sich durch diesen bewegenden Objekte, abgetastet werden. Somit weisen die Bilder unterschiedlicher optischer Konfigurationen unterschiedliche Informationsgehalte auf. Vorzugsweise sind Beleuchtungswinkel von bis zu 60° in Bezug auf eine Durchstrahlrichtung möglich.

Gemäß einer weiteren Ausführungsform der Aufnahmeeinrichtung weist die Beleuchtungsvorrichtung eine Mehrzahl an Beleuchtungseinheiten auf, wobei eine jeweilige der Beleuchtungseinheiten in einer der Winkelpositionen angeordnet ist.

Die Beleuchtungseinheiten sind beispielsweise als LEDs ausgebildet. Die Beleuchtungseinheit ist vorzugsweise als ein LED-Array ausgebildet. Die unterschiedlichen optischen Konfigurationen der Aufnahmeeinrichtung lassen sich hierbei rein elektronisch erzielen, ohne dass eine mechanische Veränderung der Aufnahmeeinrichtung vorzunehmen ist.

Gemäß einer weiteren Ausführungsform der Aufnahmeeinrichtung ist einer jeweiligen Beleuchtungseinheit eine Kollimationseinheit zum Kollimieren des von der Beleuchtungseinheit abgestrahlten Lichts zugeordnet.

Die Kollimationseinheit kann beispielsweise als eine Linse ausgebildet sein.

Gemäß einer weiteren Ausführungsform der Aufnahmeeinrichtung umfasst die Erkennungseinheit ein neuronales Netzwerk.

Ein neuronales Netzwerk kann vorteilhaft für die Erkennung von Mustern und Strukturen in Bildern trainiert und eingesetzt werden. Ein neuronales Netzwerk ist insbesondere in der Lage, sich mit zunehmender Einsatzdauer fortlaufend zu verbessern.

Gemäß einer weiteren Ausführungsform der Aufnahmeeinrichtung weist das Objektiv eine Maßstabszahl von 1 - 10x, bevorzugt von 2 - 5x, auf.

Eine kleine Maßstabszahl geht einher mit einem großen Gesichtsfeld, wodurch - bei gleicher Größe der Detektionsfläche der Erfassungsvorrichtung - ein größerer Aufnahmebereich erfasst werden kann.

Gemäß einer weiteren Ausführungsform der Aufnahmeeinrichtung weist das Objektiv in Luft eine numerische Apertur von 0,005 - 0,25, bevorzugt von 0,01 - 0,15, auf.

Eine geringe numerische Apertur weist vorteilhaft eine hohe Tiefenschärfe auf und erlaubt zudem einen hohen Arbeitsabstand zu dem Aufnahmebereich. Damit ist auch eine Empfindlichkeit gegenüber einer (Fehl-)Justierung der Aufnahmeeinrichtung reduziert, was die Handhabung erleichtert.

Gemäß einer weiteren Ausführungsform der Aufnahmeeinrichtung sind in unterschiedlichen optischen Konfigurationen unterschiedliche Belichtungsparameter verwendbar.

Unter Belichtungsparameter werden hierbei insbesondere eine Belichtungsdauer, eine Beleuchtungsstärke und/oder eine Empfindlichkeit des Bilddetektors verstanden. Insbesondere bei einer Beleuchtung von hohen Winkeln aus sinkt die von dem Aufnahmebereich oder dem Objekt in den Akzeptanzwinkel des Objektivs gestreute Intensität stark ab, was durch anpassen der Belichtungsparameter zumindest teilweise kompensiert werden kann.

Gemäß einer weiteren Ausführungsform der Aufnahmeeinrichtung ist die Erfassungsvorrichtung zum Erfassen eines der N Bilder mittels Stacking einer Mehrzahl von Einzelbildern bei gleicher optischer Konfiguration erzeugbar.

Die Einzelbilder sind hierbei in der gleichen optischen Konfiguration und in einem möglichst kurzen zeitlichen Abstand zueinander zu erfassen.

Diese Ausführungsform ist vorteilhaft, um ein Signal-RauschVerhältnis in einem Bild zu verbessern, da sich beispielsweise durch eine Mittelwertbildung ein in den Einzelbildern vorhandenes Rauschen in dem daraus erzeugten Bild reduzieren lässt.

Gemäß einem weiteren Aspekt wird ein Verfahren zum Erzeugen eines hochaufgelösten Bildes eines sich durch einen Aufnahmebereich bewegenden Objekts aus einer Mehrzahl von N Bildern vorgeschlagen. Hierzu ist eine Aufnahmeeinrichtung mit einer Beleuchtungsvorrichtung zum Beleuchten des Aufnahmebereichs und eine Erfassungsvorrichtung zum Erfassen eines mittels eines Objektivs erzeugten Abbilds des beleuchteten Aufnahmebereichs als eines der N Bilder vorgesehen. In einem Schritt A) erfasst die Erfassungsvorrichtung eine Bilderserie umfassend die N Bilder derart, dass jedes der N Bilder mit einer jeweiligen optischen Konfiguration aus einer Mehrzahl von N optischen Konfigurationen der Aufnahmeeinrichtung erfasst wird. In einem Schritt B) wird das Objekt erkannt und eine Position und/oder eine Ausrichtung des erkannten Objekts in jedem der N Bilder wird ermittelt. In einem Schritt C) werden N synthetische Bilder auf Basis der erfassten N Bilder erzeugt, wobei die Position des Objekts in jedem der erzeugten N synthetischen Bilder gleich einer vorbestimmten Referenzposition und/oder die Ausrichtung des Objekts in jedem der erzeugten N synthetischen Bilder gleich einer vorbestimmten Referenzausrichtung ist. In einem letzten Schritt D) wird das hochaufgelöste Bild des Objekts auf Basis der N synthetischen Bilder erzeugt.

Dieses Verfahren ist vorteilhaft mit der Aufnahmeeinrichtung gemäß dem ersten Aspekt durchführbar. Die für die vorgeschlagene Aufnahmeeinrichtung beschriebenen Ausführungsformen und Merkmale gelten für das vorgeschlagene Verfahren entsprechend. Das Verfahren weist die zur Aufnahmeeinrichtung beschriebenen Vorteile entsprechend auf.

Gemäß einer Ausführungsform des Verfahrens umfasst Schritt C) die folgenden Teilschritte. In einem Schritt C1) erfolgt ein Segmentieren des erkannten Objekts in jedem der N Bilder zum Bereitstellen von N Objektsegmenten, wobei ein jeweiliges der N Objektsegmente das Objekt umfasst. In einem Schritt C2) werden N Transformationsvorschriften ermittelt. Jede der N Transformationsvorschriften ist einem der N Objektsegmente zugeordnet. Die Transformationsvorschrift wird derart ermittelt, dass durch Anwenden der zugeordneten Transformationsvorschrift auf das Objektsegment ein transformiertes Objektsegment erzeugt wird, wobei die Position des Objekts in dem transformierten Objektsegment der vorbestimmten Referenzposition und/oder die Ausrichtung des Objekts in dem transformierten Objektsegment der vorbestimmten Referenzausrichtung entspricht. In einem Schritt C3) werden N transformierte Objektsegmente durch Anwenden der zugeordneten Transformationsvorschrift auf das entsprechende der N Objektsegmente erzeugt und die N synthetischen Bilder werden mittels den N transformierten Objektsegmente erzeugt.

Weiterhin wird ein Computerprogrammprodukt vorgeschlagen, welches auf einer programmgesteuerten Einrichtung die Durchführung des wie oben erläuterten Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
Fig. 1 zeigt eine schematische Ansicht eines Ausführungsbeispiels einer Aufnahmeeinrichtung;
Fig. 2 zeigt drei schematische Ansichten eines Ausführungsbeispiels einer Aufnahmeeinrichtung in unterschiedlichen optischen Konfigurationen;
Fig. 3 zeigt ein schematisches Blockdiagramm eines Erzeugens eines hochaufgelösten Bildes eines Objekts aus einer Mehrzahl von N Bildern.
Fig. 4 zeigt schematisch ein Ausführungsbeispiel eines Erzeugens von synthetischen Bildern auf Basis von erfassten Bildern;
Fig. 5 zeigt schematisch ein weiteres Ausführungsbeispiel eines Erzeugens von synthetischen Bildern mittels Objektsegmenten; und
Fig. 6 zeigt ein schematisches Blockschaltbild eines Ausführungsbeispiels eines Verfahrens zum Erzeugen eines hochaufgelösten Bildes eines bewegten Objekts.

In den Figuren sind gleiche oder funktionsgleiche Elemente mit denselben Bezugszeichen versehen worden, sofern nichts anderes angegeben ist.

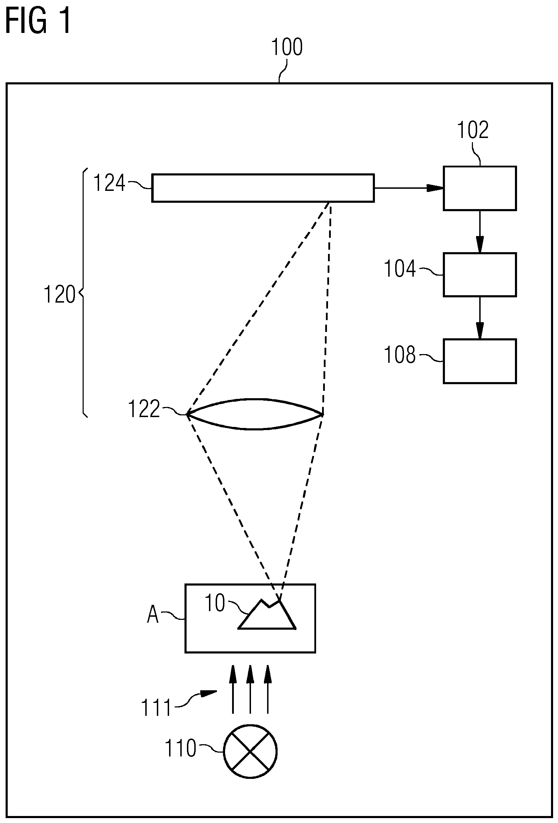

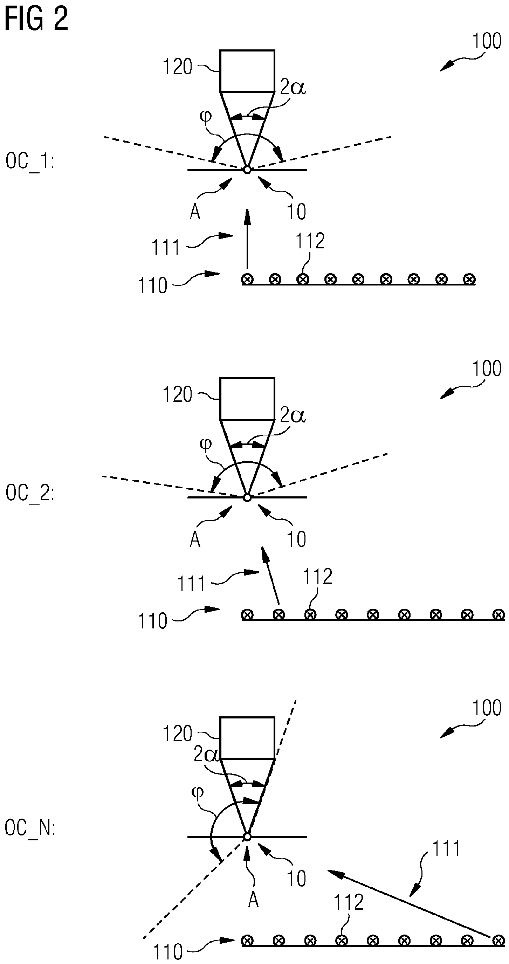

Fig. 1 zeigt eine schematische Ansicht eines Ausführungsbeispiels einer Aufnahmeeinrichtung 100. Die Aufnahmeeinrichtung 100 ist vorliegend als ein optisches Mikroskop in Durchlichtkonfiguration ausgebildet. Das optische Mikroskop 100 weist hierfür eine Beleuchtungsvorrichtung 110 auf, die Strahlung 111, vorliegend beispielsweise Licht mit einer Wellenlänge von 500 nm, in Richtung des Aufnahmebereichs A abstrahlt. Die Strahlung 111 ist insbesondere kohärent. Eine Erfassungsvorrichtung 120 umfasst ein Objektiv 122 und eine Detektionsfläche 124. Das Objektiv 122 bildet das in dem Aufnahmebereich A angeordnete Objekt 10 auf die Detektionsfläche 124 ab. In der Fig. 1 ist gestrichelt ein Verlauf der von einem Punkt auf dem Objekt 10 ausgehenden Lichtstrahlen, die in dem Akzeptanzwinkel 2α (siehe Fig. 2) des Objektivs 122 liegen, dargestellt. Auf der Detektionsfläche 124 entsteht auf diese Weise ein gemäß der Maßstabszahl des Objektivs 122 vergrößertes Abbild des Aufnahmebereichs A, umfassend ein entsprechend vergrößertes Abbild des Objekts 10.

Die Aufnahmeeinrichtung 100 umfasst ferner eine Erkennungseinheit 102, eine Erzeugungseinheit 104 und eine Auswerteeinheit 108. Die Erkennungseinheit 102 nimmt von der Erfassungsvorrichtung 120 die erfassten Bilder entgegen und erkennt in diesen das Objekt 10 und ermittelt die Position sowie die Ausrichtung des Objekts 10. Die Erzeugungseinheit 104 erzeugt auf Basis der Bilder und der von der Erkennungseinheit 102 erkannten Objekte 10 synthetische Bilder. Die synthetischen Bilder bilden eine Bilderserie, die von der Auswerteeinheit 108 mittels Fourier-ptychografischer Methoden ausgewertet werden. Dies ist nachfolgend anhand der Fig. 2 - 4 näher erläutert.

Fig. 2 zeigt drei übereinander angeordnete schematische Ansichten eines Ausführungsbeispiels einer Aufnahmeeinrichtung 100, die drei unterschiedlichen optischen Konfigurationen OC_1, OC_2, OC_N der Aufnahmeeinrichtung 100 darstellen. Aus Gründen der Übersichtlichkeit sind nur einige der Elemente der Aufnahmeeinrichtung 100 dargestellt, diese umfasst aber zumindest die in der Fig. 1 bereits gezeigten Elemente.

Die Aufnahmeeinrichtung 100 umfasst eine als LED-Array ausgebildete Beleuchtungsvorrichtung 110, die hier ohne Beschränkung der Allgemeinheit neun Beleuchtungseinheiten 112, die als LEDs ausgebildet sind, aufweist. Für eine verbesserte Übersicht ist nur eine der LEDs 112 mit einem Bezugszeichen gekennzeichnet. Die Beleuchtungsvorrichtung 110 ist beispielsweise in einem Abstand von 5 - 50 cm, bevorzugt 5 - 20 cm, von dem Aufnahmebereich A entfernt angeordnet. Der Aufnahmebereich A ist hier als eine Öffnung in einem Probentisch dargestellt. In dem Aufnahmebereich A ist die Probe 10 angeordnet.

Oberhalb des Aufnahmebereichs A ist die Erfassungsvorrichtung 120 angeordnet. Die Erfassungsvorrichtung 120 umfasst ein Objektiv 122 (siehe Fig. 1), welches durch seinen Akzeptanzwinkel 2α gekennzeichnet ist. Das Licht, das von dem Aufnahmebereich A ausgehend in den durch den Akzeptanzwinkel 2α bestimmten Raumwinkel abgestrahlt wird, wird von dem Objektiv 122 erfasst und auf die Detektionsfläche 124 (siehe Fig. 1) abgebildet. Je größer der Akzeptanzwinkel 2α des Objektivs 122, umso größer ist die numerische Apertur des Objektivs 122, und damit auch dessen Auflösungsvermögen. Allerdings sinkt mit steigender numerischer Apertur sowohl ein Tiefenschärfebereich als auch ein Gesichtsfeld (und damit der erfassbare Aufnahmebereich A) als auch beispielsweise ein Arbeitsabstand zwischen dem Objektiv 122 und Aufnahmebereich A. Vorliegend weist die Aufnahmeeinrichtung beispielsweise ein Objektiv mit einer Maßstabszahl von 5x und einer numerischen Apertur von 0,15 auf, wobei der Akzeptanzwinkel 2α beispielsweise etwa 17° beträgt.

Mit gestrichelten Linien ist ein Streuwinkel ϕ dargestellt. Der Winkel ϕ deutet den Raumwinkel an, in den bei der jeweiligen optischen Konfiguration OC_1, OC_2, OC_N Licht von dem im Aufnahmebereich A angeordneten Objekt 10 gestreut, gebeugt, reflektiert oder gebrochen wird, sofern das Objekt 10 eine entsprechende Beschaffenheit aufweist. Alles Licht, das von dem Objekt 10 in den Raumwinkel ϕ "abgestrahlt" wird, trägt eine Information über das Objekt 10, weshalb es vorteilhaft ist, dieses Licht ebenfalls zu erfassen, was allerdings mit einem einzelnen Bild mit dem verwendeten Objektiv 122 nicht möglich ist. Durch Aufnahme mehrere Bilder in den unterschiedlichen optischen Konfigurationen OC_1, OC_2, OC_N und eine computergestützte Bildverarbeitung kann dies dennoch erreicht werden.

Wie in der Fig. 2 dargestellt, unterscheiden sich unterschiedliche optische Konfigurationen OC_1, OC_2, OC_N in diesem Ausführungsbeispiel dadurch, dass jeweils eine andere LED 112 zum Beleuchten des Aufnahmebereichs A angesteuert wird. Da die LEDs 112 jeweils eine andere Winkelposition in Bezug auf den Aufnahmebereich A aufweisen, ergeben sich Unterschiede in der Beleuchtung. Insbesondere hat die Beleuchtung aus unterschiedlichen Winkelpositionen den Effekt, dass sich eine relative Lage zwischen dem Akzeptanzwinkel 2α und dem Streuwinkel ϕ verändert. So erfolgt bei der dritten dargestellten optischen Konfiguration OC_N die Beleuchtung aus einer Winkelposition heraus, so dass das Licht, das in einen sehr hohen Raumwinkelbereich gestreut wird, in den Akzeptanzwinkel 2α des Objektivs 122 fällt. Man kann auch sagen, dass der Winkel ϕ durch die unterschiedlichen optischen Konfigurationen OC_1, OC_2, OC_N abgerastert wird.

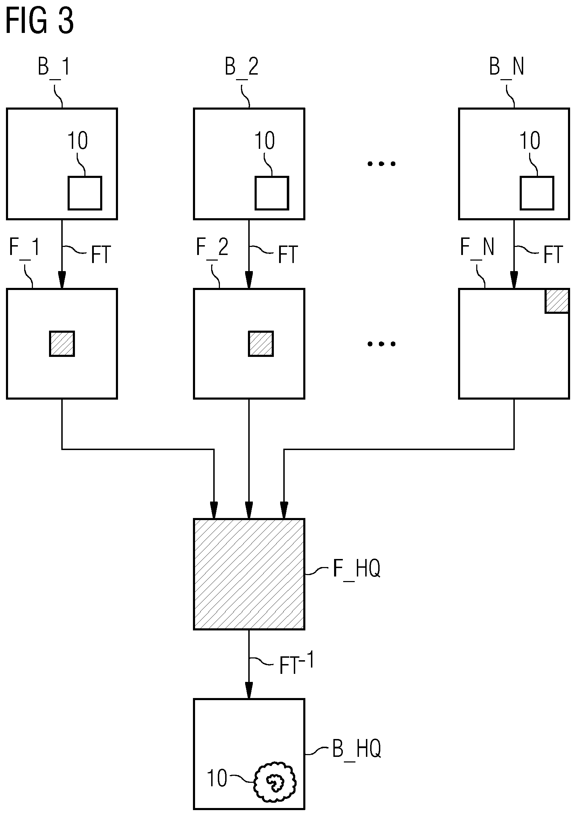

Auf diese Weise enthält ein Satz von N erfassten Bildern B_1 - B_N (siehe Fig. 3) daher zumindest die gleiche Informationsmenge bezüglich des Objekts 10, wie ein mit einem Objektiv 122 mit großer numerischer Apertur erfasstes Einzelbild. Gegenüber einem solcherart erfassten Einzelbild ist jedoch das Gesichtsfeld und die Tiefenschärfe in den Bildern B_1 - B_N signifikant vergrößert. Durch die nachfolgende Fourier-ptychografische Auswertung der N erfassten Bilder B_1 - B_N lässt sich ein hochaufgelöstes Bild des Objekts 10 erzeugen. Dies ist nachfolgend anhand der Fig. 3 näher erläutert.

Es sei angemerkt, dass in der Fig. 2 beispielhaft lediglich eine Reihe von nebeneinander angeordneten LEDs 112 dargestellt ist, die sich auch nur von der Mitte ausgehend in eine Richtung erstrecken. In tatsächlichen Ausführungen der Aufnahmeeinrichtung 100 kann das LED-Array 110 eine dreidimensionale Anordnung von LEDs 112 umfassen, welche im Extremfall den gesamten Halbraum unterhalb des Aufnahmebereichs A abdecken. Insbesondere umfasst ein solches LED-Array 110 mehrere hundert, beispielsweise 200, 300 oder auch bis zu 400 LEDs 112, womit die Aufnahmeeinrichtung 100 auch entsprechend viele optischen Konfigurationen OC_1 - OC_N aufweisen kann. Es kann auch vorgesehen sein, in einer der optischen Konfiguration OC_1 - OC_N mehrere der LEDs 112 des LED-Arrays 110 angesteuert werden, vorzugsweise gemäß einem vorbestimmten Muster.

Eine Dauer eines Aufnehmens einer kompletten Bilderserie hängt insbesondere von der Anzahl der optischen Konfigurationen OC_1 - OC_N sowie den Belichtungsparametern, die dabei verwendet werden, ab. Bei gleicher Belichtung in jeder der N optischen Konfigurationen OC_1 - OC_N, beispielsweise 10 ms, wobei eine jeweilige der LEDs 112 für 20 ms angesteuert wird, mit beispielsweise N = 200 LEDs insgesamt, ergibt sich eine Dauer von vier Sekunden. Mit einem Objektiv mit Maßstabszahl 5x, numerischer Apertur 0,15 und einem Arbeitsabstand von 14 mm ergibt sich ein Gesichtsfeld von etwa 4,2 mm Durchmesser. Hieraus lässt sich eine maximale Bewegungsgeschwindigkeit des sich bewegenden Objekts ableiten, bei der eine komplette Bilderserie erfassbar ist, vorliegend beispielsweise etwa 1 mm/s.

Fig. 3 zeigt ein schematisches Blockdiagramm eines Erzeugens eines hochaufgelösten Bildes B_HQ eines Objekts 10 aus einer Mehrzahl von N Bildern B_1 - B_N, die mit jeweils einer unterschiedlichen optischen Konfiguration OC_1 - OC_N (siehe Fig. 2) einer Aufnahmeeinrichtung 100 (siehe Fig. 1 oder Fig. 2) erfasst wurden. Die N Bilder B_1 - B_N, von denen in Fig.3 nur drei dargestellt sind, bilden eine Bilderserie, die sich mittels Fourier-ptychografischen Methoden auswerten lässt. Jedes der N Bilder B_1, B_2, B_N enthält das Objekt 10 mit einer relativ geringen Auflösung, weshalb das Objekt 10 schematisch als ein Quadrat dargestellt ist. Um die Erklärung der Fig. 3 einfach zu halten, wird hier davon ausgegangen, dass sich das Objekt 10 nicht bewegt.

Zunächst wird aus jedem der N Bilder B_1, B_2, B_N mittels Fourier-Transformation FT eine zugehörige Fourier-Transformierte F_1, F_2, F_N berechnet. Da die N Bilder B_1, B_2, B_N mit unterschiedlichen optischen Konfigurationen OC_1, OC_2, OC_N erfasst wurden, enthalten die Bilder bezogen auf den Fourier-Raum unterschiedliche Bereiche des Fourier-Spektrums des Aufnahmebereichs A mit dem Objekt 10. Daher enthalten die Fourier-Transformierten F_1, F_2, F_N in der Darstellung der Fig. 3 jeweils nur einen kleinen Bereich mit Information.

Die N Fourier-Transformierten F_1, F_2, F_N lassen sich zu einem großen Fourier-Spektrum F_HQ zusammensetzen, welches beispielsweise das gesamte Fourier-Spektrum des Aufnahmebereichs A und des Objekts 10 enthält.

Durch eine inverse Fourier-Transformation FT⁻¹ lässt sich aus dem großen Fourier-Spektrum F_HQ das hochaufgelöste Bild B_HQ des Objekts 10 berechnen. In dem hochaufgelösten Bild B_HQ weist das Objekt 10 eine hohe Detaildichte im Vergleich zu den Bildern B_1, B_2, B_N auf.

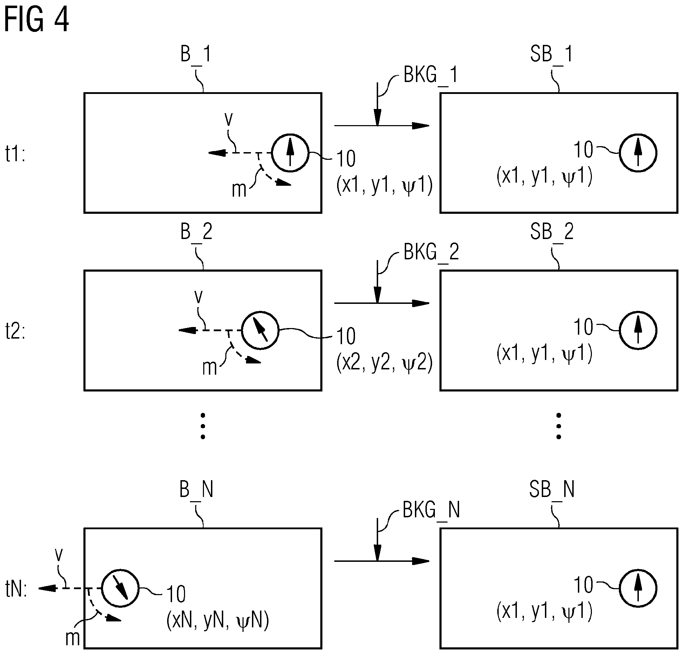

Fig. 4 zeigt schematisch ein Ausführungsbeispiel eines Erzeugens von N synthetischen Bildern SB_1 - SB_N auf Basis von N erfassten Bildern B_1 - B_N. Die N erfassten Bilder B_1 - B_N werden beispielsweise mit der Aufnahmeeinrichtung 100 der Fig. 1 oder Fig. 2 erfasst. Es sind drei Bilder B_1, B_2, B_N dargestellt. Die drei Bilder B_1, B_2, B_N wurden insbesondere mit unterschiedlichen optischen Konfigurationen OC_1, OC_2, OC_N, wie anhand der Fig. 2 oder der Fig. 3 erklärt, erfasst.

In diesem Beispiel bewegt sich ein Objekt 10 durch den Aufnahmebereich A (siehe Fig. 1 oder Fig. 2). Beispielsweise handelt es sich um ein rotes Blutkörperchen, das in einer Suspension durch eine Flusszelle geleitet wird, die den Aufnahmebereich A bildet. Das Blutkörperchen 10 ist schematisch als ein Kreis dargestellt. Es weist eine Ausrichtung auf, die mit dem Pfeil in dem Kreis dargestellt ist. Das Blutkörperchen bewegt sich mit einer Geschwindigkeit v durch die Flusszelle und es besitzt einen Drehimpuls m, weshalb es sich zudem um eine Achse dreht. Die Drehachse ist in diesem Beispiel orthogonal zur Zeichenebene. In dem ersten Bild B_1, das zu einem ersten Zeitpunkt t1 erfasst wurde, weist das Blutkörperchen 10 eine Position und Ausrichtung auf, die hier mit den drei Koordinaten (x1, y1, ψ1) angegeben ist. Diese Position und Ausrichtung werden vorliegend als die Referenzposition und Referenzausrichtung bestimmt.

Die weiteren Bilder der Bilderserie werden zu jeweils späteren Zeitpunkten als dem Zeitpunkt t1 erfasst, weshalb sich das Blutkörperchen 10 in diesen an anderen Positionen befindet. In dem Bild B_2 zum Zeitpunkt t2 hat sich das Blutkörperchen 10 ein kleines Stück weiterbewegt und ein bisschen gedreht, es weist jetzt die Koordinaten (x2, y2, ψ2) auf. In dem N-ten Bild B_N, welches zu einem Zeitpunkt tN erfasst wurde und das letzte Bild der Serie darstellt, hat sich das Blutkörperchen 10 fast durch die gesamte Flusszelle bzw. den gesamten Aufnahmebereich A bewegt und weiter gedreht, es weist nun die Koordinaten (xN, yN, ψN) auf.

Auf Basis der N erfassten Bilder B_1 - B_N werden nun N synthetische Bilder SB_1 - SB_N erzeugt. In jedem der N synthetischen Bilder SB_1 - SB_N weist das Blutkörperchen 10 die Referenzposition und Referenzausrichtung auf, wie anhand der Koordinaten ersichtlich ist. Außer dieser "Verschiebung" des Objekts 10 auf die entsprechenden Koordinaten kann bei dem Erzeugen des jeweiligen synthetischen Bildes SB_1 - SB_N insbesondere auch eine Korrekturinformation BKG_1 - BKG_N berücksichtigt werden. Die Korrekturinformation BKG 1 - BKG N umfasst beispielsweise eine Hintergrundinformation für eine jeweilige optische Konfiguration OC_1 - OC_N. Dies kann zur Verbesserung eines Signal-Rausch-Verhältnisses sowie zu einem gesteigerten Kontrast in den synthetischen Bildern SB_1 - SB_N beitragen.

Die so erzeugten N synthetischen Bilder SB_1 - SB_N bilden eine Bilderserie, bei der das Objekt 10 als statisch gesehen wird, weshalb diese sich zur Auswertung mittels Fourier-ptychografischen Methoden, wie beispielsweise anhand der Fig. 3 beschrieben, eignet.

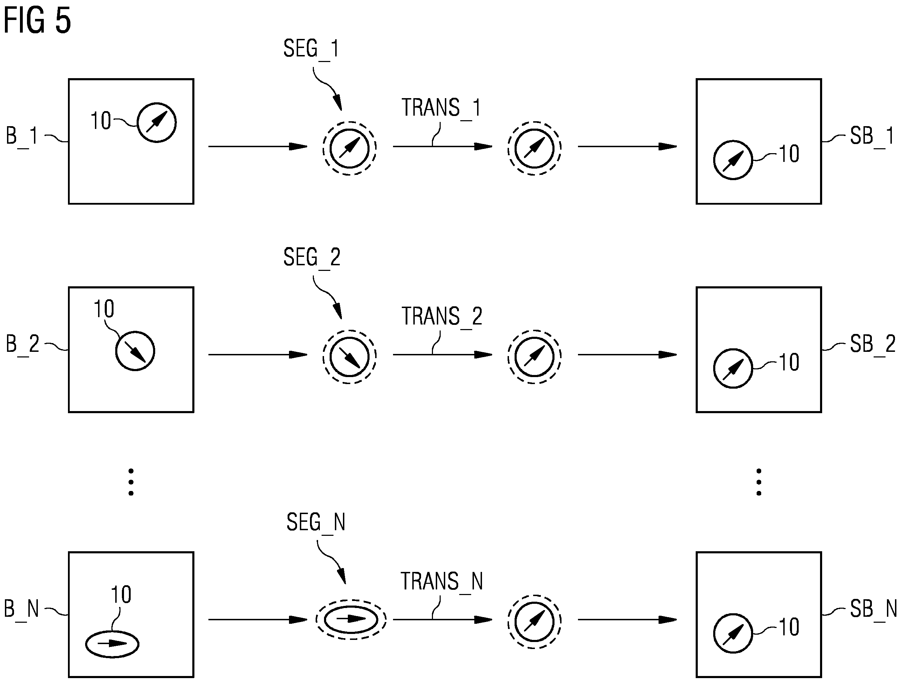

Fig. 5 zeigt schematisch ein weiteres Ausführungsbeispiel eines Erzeugens von N synthetischen Bildern SB_1 - SB_N. Hierbei wird zunächst aus jedem der N erfassten Bilder B1 - B_N ein Objektsegment SEG_1 - SEG_N ausgeschnitten, welches mittels einer entsprechenden ermittelten Transformationsvorschrift TRANS_1 - TRANS_N transformiert wird. Mit den transformierten Objektsegmenten werden dann die entsprechenden synthetischen Bilder SB_1 - SB_N erzeugt.

Es sind drei Bilder B_1, B_2, B_N gezeigt. Jedes der Bilder B_1, B_2, B_N enthält das Objekt 10, wobei hiermit gemeint ist, dass jedes der Bilder eine Abbildung des Objekts 10 enthält. Die Erkennungseinheit 102 (siehe Fig. 1) erkennt das Objekt 10 in jedem der Bilder B_1 - B_N. Bezüglich dem N-ten Bild B_N ist ein Spezialfall dargestellt, bei welchem die Abbildung des Objekts 10 in dem Bild verzerrt ist, beispielsweise durch einen Abbildungsfehler des Objektivs 122. Die Erkennungseinheit 102 ist hierbei dazu eingerichtet, das Objekt 10 dennoch zu erkennen.

Eine Segmentierungseinheit, die beispielsweise ein Bestandteil der Erkennungseinheit 102 oder auch der Erzeugungseinheit 104 ist, ist dazu eingerichtet, aus jedem der N Bilder B_1 - B_N ein Objektsegment SEG_1 - SEG_N zu segmentieren. Hierunter wird insbesondere verstanden, dass die Segmentierungseinheit diejenigen Bildpunkte eines Bildes, die eine Intensitätsinformation des Objekts 10 enthalten, auszuschneiden. Ein jeweiliges Objektsegment SEG_1 - SEG_N stellt damit selbst ein Bild mit Bildpunkten dar. Die Linie, an der die Segmentierungseinheit das Objektsegment SEG_1 - SEG_N ausschneidet, kann eine vorbestimmte geometrische Form sein oder kann eine Freiformlinie sein, die beispielsweise in Abhängigkeit von Schwellwerten einer Intensitäts- oder Kontrastfunktion für jedes der N Bilder B_1 - B_N individuell ermittelt wird. Dies wird bei einem Vergleich der Objektsegmente SEG_1, SEG_2, SEG_N deutlich, da das N-te Objektsegment SEG_N eine elliptische Form aufweist, die beiden anderen aber jeweils eine runde Form. Es ist ebenfalls zu erkennen, dass in diesem Beispiel das Objekt 10 mit einem gewissen "Rand" aus dem jeweiligen der N Bilder B_1 - B_N ausgeschnitten wird. Auf diese Weise kann ein Abschneiden von Bildpunkten mit verwertbaren Informationen des Objekts 10 vermieden werden.

Für jedes der Objektsegmente SEG_1 - SEG_N wird durch eine Ermittlungseinheit, die beispielsweise ein Bestandteil der Erzeugungseinheit 104 ist, eine Transformationsvorschrift TRANS_1 -TRANS_N ermittelt. Die jeweilige Transformationsvorschrift TRANS_1 - TRANS_N wird in Abhängigkeit des jeweiligen Objektsegments SEG_1 - SEG_N sowie der vorbestimmten Referenzposition und/oder Referenzausrichtung ermittelt. Die Transformationsvorschrift TRANS_1 - TRANS_N wird so bestimmt, dass durch Anwenden dieser auf das entsprechende Objektsegment SEG_1 - SEG_N ein transformiertes Objektsegment erzeugt wird, in welchem die Position und/oder die Ausrichtung des darin enthaltenen Objekts 10 der Referenzposition und/oder Ausrichtung entspricht.

Durch Einsetzen der transformierten Objektsegmente in ein künstlich erzeugtes Bild oder Frame werden so die N synthetischen Bilder SB_1 - SB_N erzeugt, die wie vorhergehend beschrieben ausgewertet werden können.

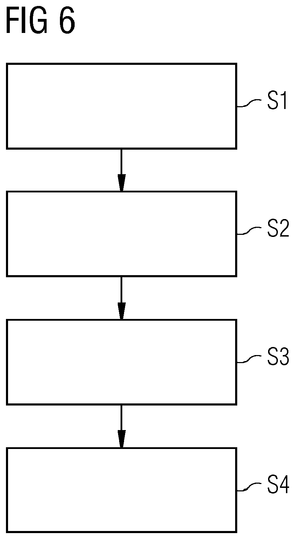

Fig. 6 zeigt ein schematisches Blockschaltbild eines Ausführungsbeispiels eines Verfahrens zum Erzeugen eines hochaufgelösten Bildes B_HQ (siehe Fig. 3) eines bewegten Objekts 10 (siehe Fig. 1 - 5). Das Verfahren ist vorzugsweise mit der Aufnahmeeinrichtung 100 einer der Fig. 1 oder Fig. 2 durchführbar.

In einem ersten Schritt S1 wird eine Bilderserie umfassend die N Bilder B_1 - B_N (siehe Fig. 3 - 5) derart aufgenommen, dass jedes der N Bilder B_1 - B_N mit einer jeweiligen optischen Konfiguration OC_1 - OC_N (siehe Fig. 2) aus einer Mehrzahl von N optischen Konfigurationen OC_1 - OC_N der Aufnahmeeinrichtung 100 erfasst wird. In einem zweiten Schritt S2 wird Objekt 10 in jedem der N Bilder B_1 - B_N erkannt und eine Position und/oder eine Ausrichtung des erkannten Objekts 10 in jedem der N Bilder B_1 - B_N ermittelt. In einem dritten Schritt S3 werden N synthetische Bilder SB_1 - SB_N (siehe Fig. 4 oder Fig. 5) auf Basis der erfassten N Bilder B_1 - B_N erzeugt. Die Position des Objekts 10 ist in jedem der erzeugten N synthetischen Bilder SB_1 - SB_N gleich einer vorbestimmten Referenzposition und/oder die Ausrichtung des Objekts 10 ist in jedem der erzeugten N synthetischen Bilder SB_1 - SB_N gleich einer vorbestimmten Referenzausrichtung. In einem vierten Schritt S4 wird das hochaufgelöste Bilde B_HQ des Objekts 10 auf Basis der N synthetischen Bilder SB_1 - SB_N erzeugt.

Obwohl die vorliegende Erfindung anhand von Ausführungsbeispielen beschrieben wurde, ist sie vielfältig modifizierbar. Insbesondere wurde ein optischer Aufbau der Aufnahmeeinrichtung 100 vorliegend nur schematisch und stark vereinfacht beschrieben. Die Aufnahmeeinrichtung 100 kann darüber hinaus jedoch alle möglichen bekannten Varianten aufweisen, wie verschiedene Linsen oder Linsensysteme, Spiegel oder Spiegelsysteme, Filter, Blenden und dergleichen mehr. Weiterhin kann insbesondere das Verfahren mit einer Aufnahmevorrichtung verwendet werden, die eine Auflicht-Geometrie aufweist, wo der Aufnahmebereich also aus dem gleichen Halbraum beleuchtet wird, in dem auch das Objektiv angeordnet ist. Damit lassen sich insbesondere auch lichtundurchlässige oder stark absorbierende Objekte erfassen.

### Bezugszeichenliste

- 10: Objekt
- 100: Aufnahmeeinrichtung
- 102: Erkennungseinheit
- 104: Erzeugungseinheit
- 108: Auswerteeinheit
- 110: Beleuchtungsvorrichtung
- 111: Strahlung
- 112: Beleuchtungseinheit
- 114: Kollimationseinheit
- 120: Erfassungsvorrichtung
- 122: Objektiv
- 124: Detektionsfläche

- 2α: Akzeptanzwinkel
- Φ: Winkel
- Ψ1: Drehwinkel
- Ψ2: Drehwinkel
- ΨN: Drehwinkel
- A: Aufnahmebereich
- BKG_1: Korrekturinformation
- BKG_2: Korrekturinformation
- BKG_N: Korrekturinformation
- B_1: Bild
- B_2: Bild
- B_HQ: hochaufgelöstes Bild
- B_N: Bild
- B_REF: Referenzbild
- F_1: Fourier-Transformierte
- F_2: Fourier-Transformierte
- F_HQ: großes Fourier-Spektrum
- F_N: Fourier-Transformierte
- FT: Fourier-Transformation
- FT⁻¹: inverse Fourier-Transformation
- OC_1: optische Konfiguration
- OC_2: optische Konfiguration
- OC_N: optische Konfiguration
- t1: Zeitpunkt
- t2: Zeitpunkt
- tN: Zeitpunkt
- TRANS_1: Transformationsvorschrift
- TRANS_2: Transformationsvorschrift
- TRANS_N: Transformationsvorschrift
- S1: Verfahrensschritt
- S2: Verfahrensschritt
- S3: Verfahrensschritt
- S4: Verfahrensschritt
- SB_1: synthetisches Bild
- SB_2: synthetisches Bild
- SB_N: synthetisches Bild
- SEG_1: Objektsegment
- SEG_2: Objektsegment
- SEG_N: Objektsegment
- x1: Koordinate
- y1: Koordinate
- x2: Koordinate
- y2: Koordinate
- xN: Koordinate
- yN: Koordinate

## Patentansprüche

1. Aufnahmeeinrichtung (100) zum Erzeugen eines hochaufgelösten Bildes (B_HQ) eines sich durch einen Aufnahmebereich (A) bewegenden Objekts (10) aus einer Mehrzahl von N Bildern (B_1 - B_N), mit:
einer Beleuchtungsvorrichtung (110) zum Beleuchten des Aufnahmebereichs (A),
einer Erfassungsvorrichtung (120) zum Erfassen eines mittels eines Objektivs (122) erzeugten Abbilds des beleuchteten Aufnahmebereichs (A) als eines der N Bilder (B_1 - B_N), wobei die Aufnahmeeinrichtung (100) zum Aufnehmen einer Bilderserie umfassend die N Bilder (B_1 - B_N) derart eingerichtet ist,
dass jedes der N Bilder (B_1 - B_N) mit einer jeweiligen optischen Konfiguration (OC_1 - OC_N) aus einer Mehrzahl von N optischen Konfigurationen (OC_1 - OC_N) der Aufnahmeeinrichtung (100) erfasst wird,
einer Erkennungseinheit (102) zum Erkennen des Objekts (10) und zum Ermitteln einer Position und/oder einer Ausrichtung des erkannten Objekts (10) in jedem der N Bilder (B_1 - B_N),
einer Erzeugungseinheit (104) zum Erzeugen von N synthetischen Bildern (SB_1 - SB_N) auf Basis der erfassten N Bilder (B_1 - B_N), wobei die Position des Objekts (10) in jedem der erzeugten N synthetischen Bilder (SB_1 - SB_N) gleich einer vorbestimmten Referenzposition und/oder die Ausrichtung des Objekts (10) in jedem der erzeugten N synthetischen Bilder (SB 1 - SB_N) gleich einer vorbestimmten Referenzausrichtung ist, und
einer Auswerteeinheit (108) zum Erzeugen des hochaufgelösten Bildes (B_HQ) des Objekts (10) auf Basis der N synthetischen Bilder (SB_1 - SB_N).

2. Aufnahmeeinrichtung nach Anspruch 1,
**gekennzeichnet durch**
eine Segmentierungseinheit (105) zum Segmentieren des erkannten Objekts (10) in jedem der N Bilder (B_1 - B_N) zum Bereitstellen von N Objektsegmenten (SEG_1 - SEG_N), wobei ein jeweiliges der N Objektsegmente (SEG_1 - SEG_N) das Objekt (10) umfasst, und
eine Ermittlungseinheit (106) zum Ermitteln von N Transformationsvorschriften (TRANS_1 - TRANS_N), wobei jede der N Transformationsvorschriften (TRANS_1 - TRANS_N) einem der N Objektsegmente (SEG_1 - SEG_N) zugeordnet ist, derart, dass durch Anwenden der zugeordneten Transformationsvorschrift (TRANS_1 - TRANS_N) auf das Objektsegment (SEG_1 - SEG_N) ein transformiertes Objektsegment erzeugt wird, wobei die Position des Objekts (10) in dem transformierten Objektsegment der vorbestimmten Referenzposition und/oder die Ausrichtung des Objekts (10) in dem transformierten Objektsegment der vorbestimmten Referenzausrichtung entspricht, und wobei die Erzeugungseinheit (104) dazu eingerichtet ist, durch Anwenden der entsprechenden zugeordneten Transformationsvorschrift (TRANS_1 - TRANS_N) auf die N Objektsegmente (SEG_1 - SEG_N) N transformierte Objektsegmente zu erzeugen und die N synthetischen Bilder (SB_1 - SB_N) mittels der N transformierten Objektsegmente zu erzeugen.

3. Aufnahmeeinrichtung nach Anspruch 1 oder 2,
**dadurch gekennzeichnet,**
**dass** die Erzeugungseinheit (104) zum Erzeugen der N synthetischen Bilder (SB 1 - SB_N) in Abhängigkeit einer Korrekturinformation (BKG_1 - BKG_N) eingerichtet ist.

4. Aufnahmeeinrichtung nach einem der Ansprüche 1 - 3,
**dadurch gekennzeichnet,**
**dass** die Erzeugungseinheit (104) dazu eingerichtet ist, die N synthetischen Bilder (SB_1 - SB_N) mittels Interpolation, insbesondere in Bezug auf die Position und/oder die Ausrichtung des Objekts (10) in dem jeweiligen der N synthetischen Bilder (SB_1 - SB_N), zu erzeugen.

5. Aufnahmeeinrichtung nach einem der Ansprüche 2 - 4,
**dadurch gekennzeichnet,**
**dass** die Segmentierungseinheit (105) zum Segmentieren des erkannten Objekts (10) in Abhängigkeit eines vorgebbaren Schwellwerts für eine Intensitätsfunktion und/oder eine Kontrastfunktion eines Bildpunkts eingerichtet ist.

6. Aufnahmeeinrichtung nach einem der Ansprüche 1 - 5,
**dadurch gekennzeichnet,**
**dass** die Erkennungseinheit (102) zum Erkennen des Objekts (10) in Abhängigkeit einer Bewegungsinformation für das Objekt (10) und/oder eines Objekttyps eingerichtet ist.

7. Aufnahmeeinrichtung nach einem der Ansprüche 1 - 6,
**dadurch gekennzeichnet,**
**dass** die Beleuchtungsvorrichtung (110) zum Beleuchten des Aufnahmebereichs (A) aus unterschiedlichen Winkelpositionen eingerichtet ist, wobei eine jeweilige Winkelposition einer der N optischen Konfigurationen (OC_1 - OC_N) der Aufnahmeeinrichtung (100) entspricht.

8. Aufnahmeeinrichtung nach Anspruch 7,
**dadurch gekennzeichnet,**
**dass** die Beleuchtungsvorrichtung (110) eine Mehrzahl an Beleuchtungseinheiten (112) aufweist, wobei eine jeweilige der Beleuchtungseinheiten (112) in einer der Winkelpositionen angeordnet ist.

9. Aufnahmeeinrichtung nach Anspruch 8,
**dadurch gekennzeichnet,**
**dass** einer jeweiligen Beleuchtungseinheit (112) eine Kollimationseinheit (114) zum Kollimieren des von der Beleuchtungseinheit (112) abgestrahlten Lichts zugeordnet ist.

10. Aufnahmeeinrichtung nach einem der Ansprüche 1 - 9,
**dadurch gekennzeichnet,**
**dass** die Erkennungseinheit (102) ein neuronales Netzwerk umfasst.

11. Aufnahmeeinrichtung nach einem der Ansprüche 1 - 10,
**dadurch gekennzeichnet,**
**dass** das Objektiv (122) eine Maßstabszahl von 1 - 10x, bevorzugt von 2 - 5x, aufweist.

12. Aufnahmeeinrichtung nach einem der Ansprüche 1 - 11,
**dadurch gekennzeichnet,**
**dass** das Objektiv (122) in Luft eine numerische Apertur von 0,005 - 0,25, bevorzugt von 0,01 - 0,15, aufweist.

13. Aufnahmeeinrichtung nach einem der Ansprüche 1 - 12,
**dadurch gekennzeichnet,**
**dass** in unterschiedlichen optischen Konfigurationen (OC_1 - OC_N) unterschiedliche Belichtungsparameter verwendbar sind.

14. Aufnahmeeinrichtung nach einem der Ansprüche 1 - 13,
**dadurch gekennzeichnet,**
**dass** die Erfassungsvorrichtung (130) zum Erfassen eines der N Bilder mittels Stacking einer Mehrzahl von Einzelbildern, die in der entsprechenden optischen Konfiguration (OC_1 - OC_N) erfassbar sind, eingerichtet ist.

15. Verfahren zum Erzeugen eines hochaufgelösten Bildes (B_HQ) eines sich durch einen Aufnahmebereich (A) bewegenden Objekts (10) aus einer Mehrzahl von N Bildern (B_1 - B_N) mit einer Aufnahmeeinrichtung (100), welche eine Beleuchtungsvorrichtung (110) zum Beleuchten des Aufnahmebereichs (A) und eine Erfassungsvorrichtung (120) zum Erfassen eines mittels eines Objektivs (122) erzeugten Abbilds des beleuchteten Aufnahmebereichs (A) als eines der N Bilder (B_1 - B_N) aufweist, das Verfahren umfassend:
A) Aufnehmen (S1) einer Bilderserie umfassend die N Bilder (B_1 - B_N) derart, dass jedes der N Bilder (B_1 - B_N) mit einer jeweiligen optischen Konfiguration (OC_1 - OC N) aus einer Mehrzahl von N optischen Konfigurationen (OC_1 - OC_N) der Aufnahmeeinrichtung (100) erfasst wird,
B) Erkennen (S2) des Objekts (10) und Ermitteln einer Position und/oder einer Ausrichtung des erkannten Objekts (10) in jedem der N Bilder (B_1 - B_N),
C) Erzeugen (S3) von N synthetischen Bildern (SB_1 - SB_N) auf Basis der erfassten N Bilder (B_1 - B_N), wobei die Position des Objekts (10) in jedem der erzeugten N synthetischen Bilder (SB_1 - SB_N) gleich einer vorbestimmten Referenzposition und/oder die Ausrichtung des Objekts (10) in jedem der erzeugten N synthetischen Bilder (SB_1 - SB_N) gleich einer vorbestimmten Referenzausrichtung ist, und
D) Erzeugen (S4) des hochaufgelösten Bildes (B_HQ) des Objekts (10) auf Basis der N synthetischen Bilder (SB_1 - SB_N).

16. Verfahren gemäß Anspruch 15,
**dadurch gekennzeichnet,**
**dass** Schritt C) umfasst:
C1) Segmentieren des erkannten Objekts (10) in jedem der N Bilder (B_1 - B N) zum Bereitstellen von N Objektsegmenten (SEG_1 - SEG_N), wobei ein jeweiliges der N Objektsegmente (SEG_1 - SEG_N) das Objekt (10) umfasst,
C2) Ermitteln von N Transformationsvorschriften (TRANS_1 - TRANS_N), wobei jede der N Transformationsvorschriften (TRANS_1 - TRANS_N) einem der N Objektsegmente (SEG_1 - SEG_N) zugeordnet ist, derart, dass durch Anwenden der zugeordneten Transformationsvorschrift (TRANS_1 - TRANS_N) auf das Objektsegment (SEG_1 - SEG_N) ein transformiertes Objektsegment erzeugt wird, wobei die Position des Objekts (10) in dem transformierten Objektsegment der vorbestimmten Referenzposition und/oder die Ausrichtung des Objekts (10) in dem transformierten Objektsegment der vorbestimmten Referenzausrichtung entspricht, und
C3) Erzeugen von N transformierten Objektsegmenten durch Anwenden der zugeordneten Transformationsvorschrift (TRANS_1 - TRANS_N) auf das entsprechende der N Objektsegmente (SEG_1 - SEG_N) und Erzeugen der N synthetischen Bilder (SB_1 - SB_N) mittels der N transformierten Objektsegmente.
